# EUROPÄISCHE PATENTANMELDUNG

(11) **EP 1 839 786 A1**
(43) Veröffentlichungstag der Anmeldung: **03.10.2007**
(21) Anmeldenummer: 07004410.2
(22) Anmeldetag: 03.03.2007
(51) Int. Cl.: B23B 31/08, B23G 1/46

(54) **Spannzangenfutter**

(30) Priorität: 31.03.2006 DE 202006005642 U
(71) Anmelder: Eugen Fahrion GmbH & Co., 73667 Kaisersbach (DE)
(72) Erfinder: Fahrion, Ulrich, 73667 Kaisersbach (DE)
(74) Vertreter: Dreiss, Uwe

(57) **Zusammenfassung**

Die Erfindung betrifft ein Spannzangenfutter, das an seinem einen Ende (11) von einer Maschinenspindel aufgenommen werden kann und an seinem anderen Ende (12) eine Spannzange (1) mit Gewindebohrer (6) oder einem Wechseleinsatz zum Spannen von Gewindebohrern aufnehmen kann, wobei das Spannfutter (5) zwischen dem Ende (11) der Aufnahme in eine Maschinenspindel und dem Ende (12) der Aufnahme der Spannzange (1) entlang mindestens einer Umfangslinie mit mindestens einem radialen Schlitz (7) versehen ist.

## Beschreibung

Die Erfindung betrifft ein Spännzangenfutter für CNC-Maschinen, und dabei insbesondere für das so genannte Rigid Tapping, bei dem eine exakte Synchronisierung des linearen Vorschubs des Gewindebohrers mit der Gewindesteigung des eingesetzten Gewindebohrers gegeben ist.

In der Praxis hat sich dabei immer wieder gezeigt, dass bei starr eingespanntem Gewindebohrer nach der Drehrichtungsumkehr, also beim Herausdrehen des Gewindebohrers, hohe Axialkräfte entstehen können, die einen höheren Verschleiß des Gewindebohrers und eine Verschlechterung der Oberflächengüte des geschnittenen Gewindes zur Folge haben.

Es sind Spannzangenfutter bekannt, bei denen sowohl in Zug, als auch in Druckrichtung der Gewindebohrer am Spannfutter federnd abgestützt ist, so zum Beispiel aus der DE 197 25 950 C2, der DE 38 29 800 A1, der DE 41 06 468 C1, der DE 31 05 248 A1, der EP 0 887 135 B1 und der EP 0 360 947 B1.

Die der Erfindung zugrunde liegende Aufgabe besteht darin, ein Spannzangenfutter zu schaffen, das möglichst einfach im Aufbau und daher möglichst einfach herzustellen ist, und bei dem die gewünschte axiale Abfederung des Gewindebohrers in Zug- und Druckrichtung bei Aufrechterhaltung der notwendigen Stabilität in radialer Richtung erfolgt.

Der Lösung dieser Aufgabe ergibt sich aus dem Anspruch 1. Vorteilhafte Weiterbildungen sind in den Unteransprüchen definiert.

Ein Ausführungsbeispiel wird im Folgenden anhand der beiliegenden Zeichnungen näher beschrieben. Es stellen dar:

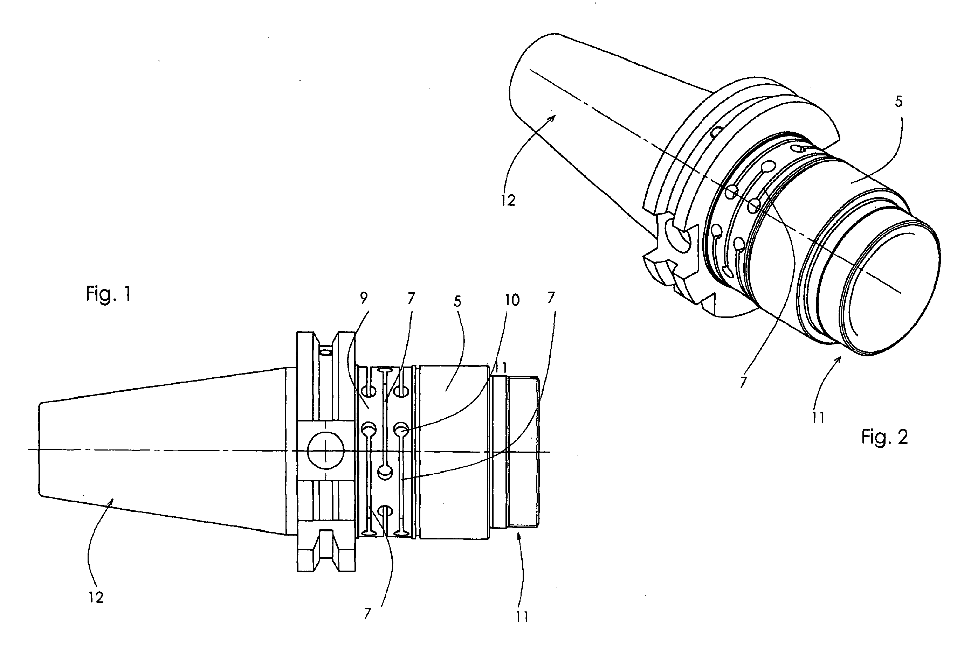

- Figur 1: eine Seitenansicht eines Ausführungsbeispiels;
- Figur 2: eine perspektivische Ansicht;
- Figur 3: einen Schnitt in Richtung der Pfeile III-III in Figur 1.

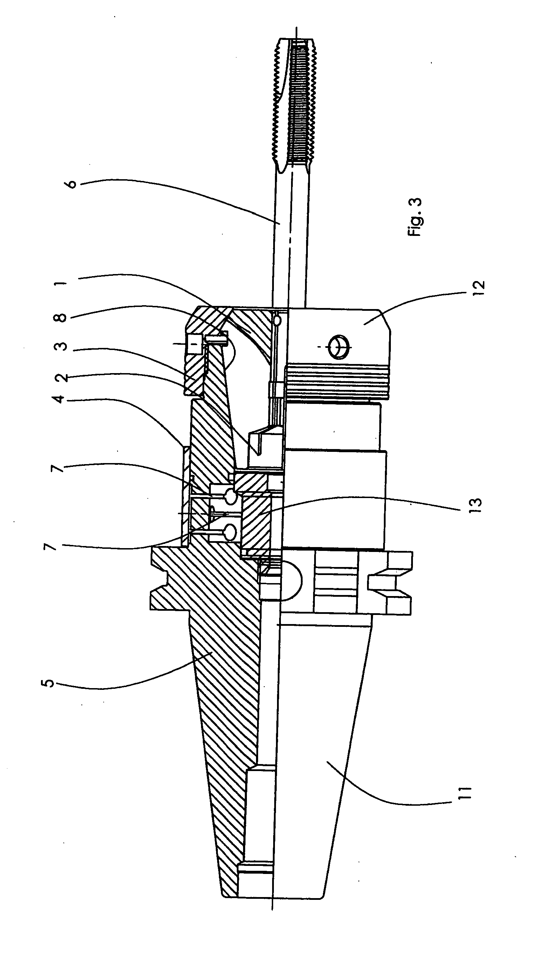

Wie am besten aus Figur 3 ersichtlich, ist in ein Spannfutter 5 eine mit Schlitzen 2 versehene Spannzange 1 eingesetzt und mit Hilfe der Spannmutter 3 in der konischen Ausnehmung 8 des Spannfutters 5 verspannt. In der Spannzange 1 ist ein Gewindebohrer 6 fest eingespannt.

Das Spannfutter 5 ist in seinem mittleren Bereich zwischen dem Ende 11, mit dem es in einer Maschinenspindel aufgenommen wird, und dem Ende 12, in dem der Gewindebohrer 6 eingespannt ist, mit drei entlang des Umfangs verlaufenden radialen Schlitzen 7 versehen. Die Erstreckung eines solchen Schlitzes 7 entlang des Umfangs beträgt jeweils etwas weniger als 60°, so dass entlang einer bestimmten Umfangslinie drei solche Schlitze 7 eingebracht sind, die voneinander durch Stege 9 getrennt sind. Wie aus den Figuren zu ersehen, sind im Ausführungsbeispiel in axialer Richtung nebeneinander entlang dreier solcher Umfangslinien je drei Schlitze 7 angeordnet, und zwar so, dass die Enden eines Schlitzes jeweils in Nähe der Mitte des axial benachbarten Schlitzes liegen. Es ergibt sich daraus eine mäanderartige Form des zwischen den Schlitzen stehen gebliebenen Materials der Wand des Spannfutters 5.

Auf diese Weise wird zwischen dem Ende 11 des Spannfutters und dem Ende 12 des Spannfutters eine begrenzte Elastizität in axialer Richtung erzeugt, die die relativ geringen, jedoch erforderlichen axialen Lageveränderungen bei Bewegungsumkehr durch Änderung der Druck- und Zugkräfte beim Herausdrehen des Gewindebohrers ausgleicht. Die Schlitze 7 sind außen durch eine Hülse 4 abgedeckt. Die Bohrungen 10 am Ende der Schlitze 7 vermeiden Spannungskonzentrationen an diesen Stellen.

Die Erfindung bewirkt, dass der Körper des Spannzangenfutters 5 entlang seines Mantels durch radiale Schlitze oder Nuten geschwächt ist, die die erwünschte axiale Elastizität bewirken, jedoch gleichzeitig die notwendige radiale Steifigkeit gewährleisten.

Die einteilige Bauweise des Spannzangenfutters ist besonders einfach und kostengünstig. Sie macht die separate Verwendung von Federelementen und spezielle Werkstoffe für diese Federelemente entbehrlich. Das Spannzangenfutter ist aus handelsüblichem Stahl gefertigt.

Im Spannfutter ist auch ein Kühlmitteladapter 13 für Werkzeuge mit Innenkühlung vorgesehen.

Anstelle der Spannzange kann in die Ausnehmung 5 auch ein Wechseleinsatz zum Spannen von Gewindebohrern eingesetzt werden.

## Patentansprüche

1. Spannzangenfutter, das an seinem einen Ende (11) von einer Maschinenspindel aufgenommen werden kann und an seinem anderen Ende (12) eine Spannzange (1) mit Gewindebohrer (6) oder einem Wechseleinsatz zum Spannen von Gewindebohrern aufnehmen kann, **dadurch gekennzeichnet, dass** das Spannfutter (5) zwischen dem Ende (11) der Aufnahme in eine Maschinenspindel und dem Ende (12) der Aufnahme der Spannzange (1) entlang mindestens einer Umfangslinie mit mindestens einem radialen Schlitz (7) versehen ist.

2. Spannzangenfutter nach Anspruch 1, **dadurch gekennzeichnet, dass** entlang einer Umfangslinie mehrere Schlitz (7) vorgesehen sind, die durch Stege (9) voneinander beabstandet sind.

3. Spannzangenfutter nach Anspruch 1 oder 2, **dadurch gekennzeichnet, dass** am Ende eines Schlitzes (7) jeweils eine Bohrung (10) vorgesehen ist.

4. Spannzangenfutter nach einem der Ansprüche 1 - 3, **dadurch gekennzeichnet, dass** in axialer Richtung nebeneinander entlang mehrerer Umfangslinien Schlitze (7) vorgesehen sind, die gegeneinander derart versetzt sind, dass sich eine mäanderartige Form des Materials des Spannzangenfutters zwischen den Schlitzen (7) ergibt.

5. Spannzangenfutter nach einem der Ansprüche 1 - 5, **dadurch gekennzeichnet, dass** die Schlitze (7) außen durch eine Hülse (4) abgedeckt sind.
